# EUROPÄISCHE PATENTSCHRIFT

(11) **EP 1 732 975 B1**
(45) Veröffentlichungstag und Bekanntmachung des Hinweises auf die Patenterteilung: **23.06.2010**
(21) Anmeldenummer: 05728360.8
(22) Anmeldetag: 22.03.2005
(51) Int. Cl.: C08J 9/00

(54) **NANOPORÖSE POLYMERSCHAUMSTOFFE AUS TREIBMITTELHALTIGEN, MEHRPHASIGEN POLYMERMISCHUNGEN**
NANOPOROUS POLYMER FOAMS FORMED FROM MULTIPHASE POLYMER MIXTURES CONTAINING A FOAMING AGENT
MOUSSES POLYMERES NANOPOREUSES A BASE DE MELANGES POLYMERES MULTIPHASES CONTENANT UN AGENT D'EXPANSION

(30) Priorität: 25.03.2004 DE 102004015093; 12.01.2005 DE 102005001636
(43) Veröffentlichungstag der Anmeldung: 20.12.2006
(73) Patentinhaber: BASF SE, 67056 Ludwigshafen (DE)
(72) Erfinder: ALLMENDINGER, Markus, 67149 Meckenheim (DE); GUERIN MOREIRA, Andre, 68167 Mannheim (DE); SCHÄDLER, Volker, F-67000 Strasbourg (FR); BOTHE, Marc, 67117 Limburgerhof (DE); RUCH, Joachim, 67157 Wachenheim (DE); EHRENSTEIN, Moritz, 67063 Ludwigshafen (DE)
(86) Internationale Anmeldenummer: PCT/EP2005/003006
(87) Internationale Veröffentlichungsnummer: WO 2005/092959

(56) Entgegenhaltungen:
- EP-A- 0 682 076
- US-A- 5 387 617
- DATABASE WPI Section Ch, Week 199912 Derwent Publications Ltd., London, GB; Class A14, AN 1999-136785 XP002333858 & JP 11 005863 A (KANEKA CORP) 12. Januar 1999 (1999-01-12)

## Beschreibung

Die Erfindung betrifft nanoporöse Polymerschaumstoffe, erhältlich durch Expandieren einer treibmittelhaltigen, mehrphasigen Polymermischung mit Domänen im Bereich von 5 bis 200 nm.

Gutes Isolationsvermögen ist für eine Vielzahl von Schaumstoffanwendungen von entscheidender Bedeutung (Wärmedämmung in Bauanwendungen oder Kühlgeräten). Wesentliche Fortschritte bei der Verringerung der Wärmeleitung können insbesondere dadurch erreicht werden, dass der Anteil des Zellgases an der Wärmeleitung ausgeschaltet wird (Knudsen Effekt).

Im Falle von Aerogelen sind Schaumstoffzellen bis in den Nanometer Bereich bereits gelungen. Hierbei sind jedoch die kostenintensive, schwierige Herstellung und die sehr schlechten mechanischen Eigenschaften der Materialien von Nachteil. Insbesondere können Aerogele nicht wie Thermoplasten verarbeitet werden und daher z.B. nicht in Formkörper verpresst werden, ohne erheblich an Wärmeisolation zu verlieren.

Nanoporöse Polymerschaumstoffe mit einer Porengröße von deutlich unter 1 µm und einer Gesamtporosität von über 90 % sind aufgrund theoretischer Überlegungen besonders hervorragende Wärmeisolatoren.

Poröse Polymere mit Porengrößen im Bereich von 10 -1000 nm sind bekannt und beispielsweise durch Polymerisation von Mikroemulsionen erhältlich (H.-P. Hentze und Markus Antonietti: Porous Polymers in Resins, 1964-2013, Vol.5 in "Handbook of Porous Solids" Wiley, 2002).

Die Copolymerisation in Mikroemulsionen von Methylmethacrylat, Ethylenglykoldimethacrylat und Acrylsäure führt zu offenzelligen Polymergelen mit schwammartigen, bikontinuierlichen Strukturen. Aufgrund von Phasenseparationseffekten während der Polymerisation ist die Porengröße der erhaltenen porösen Struktur jedoch beträchtlich größer als die der Mikroemulsion und liegt im Bereich von 1 - 4 µm (W.R.P. Raj J. Appl. Polym. Sci. 1993, 47, 499-511). Im allgemeinen führt die Polymerisation in Mikroemulsionen zum Verlust der für die Mikroemulsion charakteristischen Längenskala von einigen 10 bis 100 nm. Zudem sind Materialien dieser Art als Wärmeisolatoren nicht geeignet, da sie sehr hohe Schüttdichten (niedrige Porositäten) aufweisen.

Um aus den Polymergelen Polymerschaumstoffe zu erhalten, müssen die fluiden Komponenten, in der Regel Wasser, entfernt werden, was bei nanoporösen Materialien aufgrund der hohen Kapillarkräfte und geringen Stabilität der Gele im allgemeinen zu einer starken Schrumpfung des Polymerschaumstoffes führt. Ein möglicher Ansatz zur Vermeidung der hohen Kapillarkräfte beim Trocknen ist die Verwendung von überkritischen Fluiden: Sogenannte Aerogele mit Poren < 100 nm sind beispielsweise durch Trocknen mit überkritischem CO₂ erhältlich (EP-A 0 171 722). Da jedoch der Einsatz überkritischer Fluide technisch sehr aufwendig und im allgemeinen mit mehreren Lösemittelwechseln verbunden ist, sind alternative Verfahren unter Vermeidung überkritischer Fluide von großem Interesse. Nanoporöse Polymerschaumstoffe, die auf organischen Monomeren basieren, mit einer Porengröße von deutlich unter 1 µm und einer Gesamtporosität von über 90 % sind derzeit ohne überkritische Fluide nicht zugänglich.

Zahlreiche Anstrengungen wurden unternommen, um aus Polymerschmelzen feinzellulare Extrusionschaumstoffe mit Zellgrößen kleiner als 10 µm herzustellen.

Aubert und Clough beschreiben die Herstellung von "Mikrozellulären Schäumen" durch das Einfrieren einer Polystyrollösung in am kritischen Punkt und anschließendem Gefriertrocknen, wobei Zellen im Bereich 1-20 µm erreicht wurden (Polymer 1985, Vol.26, 2047-2055).

Von Handa und Zhang wurde die Herstellung von "ultramikrozellulären Schäumen" durch schnelle Temperaturerhöhung von PMMA/CO₂-Mischungen beschrieben (US 5,955,511). Auf diese Weise wurden im besten Fall Zellen erreicht, deren mittlere Größe bei 0,5 µm lag.

In US 4,473,665 wird von Martini-Vvedensky et al. ein spezielles Extrusionsverfahren beschrieben, mit dem sogenannte mikrozelluläre Schaumstoffe erzeugt werden können, deren Zellgrößen im Bereich 2 - 25 µm liegen. Dieses Verfahren ist auf Thermoplasten, Elastomere und flüssigkristalline Polymer anwendbar und wurde z.B. in US 5,158, 986 weiterentwickelt.

Ein großer Nachteil an diesen Verfahren ist, dass überkritische Fluide erforderlich sind, um Porendimensionen kleiner als 5 µm zu realisieren.

Die US 5,387,617 offenbart ein Verfahren zur Herstellung von feinzelligen Schäumen durch Expandieren einer Mischung aus Matrixpolymer, modifizierten Dendrimeren mit hydrophober Oberfläche und einem Teilchendurchmesser von 5 bis 1000 nm als Nukleierungsmittel und einem physikalischen Treibmittel.

EP-A 682 076 offenbart expandierbare Styrolpolmerisate für elastische Polymerschäume ausgehend von einem Blend mit einer Polystyrolphase und einem Pfropfcopolymerisat mit Kern-Schale-Aufbau in Form von Kapselteilchen mit Durchmesser von 50 nm bis 300 nm, wobei der Blend mit einem Treibmittel beladen und anschließend expandiert wird. Sowohl die US 5,387,617 als auch die EP-A682076 offenbaren keine nanoprorösen Polymerschaumstoffe.

Aufgabe der vorliegenden Erfindung war es daher, nanoporöse Polymerschaumstoffe mit Poren mit Porengrößen bis 1000 nm und hoher Gesamtporosität bereitzustellen, sowie ein Verfahren zu dessen Herstellung zu finden, das vorzugsweise ohne Einsatz von überkritischen Fluiden auskommt.

Demgemäss wurden nanoporöse Polymerschaumstoffe gefunden, die durch Expandieren einer einen Kohlenwasserstoff, Alkohol, Keton, Ether oder Alkylester mit einem Siedepunkt bei Normaldruck unter 120°C oder eine Mischung davon als Treibmittel enthaltenden mehrphasigen Polymermischung mit Domänen im Bereich von 5 bis 200 nm, bevorzugt im Bereich von 10 bis 80 nm erhältlich sind, wobei die Löslichkeit des Treibmittels in der die Domänen bildenden Phase mindestens doppelt so hoch ist wie in den angrenzenden Phasen.

Es ist aus dem Bereich der mehrphasigen Polymersysteme bekannt, dass die meisten Polymere nicht oder nur geringfügig miteinander mischbar sind (Flory), so dass es je nach Temperatur, Druck und chemischer Zusammensetzung zur Entmischung in jeweilige Phasen kommt. Werden unverträgliche Polymere kovalent miteinander verknüpft, so findet die Entmischung nicht auf makroskopischer, sondern lediglich auf mikroskopischer Ebene statt, d.h. auf der Längenskala der einzelnen Polymerkette. In diesem Fall spricht man daher von Mikrophasenseparation. Daraus resultieren eine Vielzahl von mesoskopischen Strukturen, z.B. lamellare, hexagonale, kubische und bikontinuierliche Morphologien, die eine starke Verwandtschaft mit lyotropen Phasen aufweisen (Hamley, The Physics of Blockcopolymers). Darüber hinaus gibt es andere Möglichkeiten eine Mikrophasenseparation in Polymerschmelzen zu erzeugen, z.B. das Einbringen von Partikeln aus Emulsionspolymerisaten.

Bevorzugt wird die mehrphasige Polymermischung aus Blockcopolymeren mit unverträglichen Blöcken, beispielsweise aus Styrol-Butadien-Blockcopolymeren gebildet. Besonders bevorzugt besteht die Domänen bildende Phase aus einem durch Emulsionspolymerisation erhältlichen Kern-Schale-Teilchen, insbesondere solchen, die eine Kern aus einem Polyacrylat oder Polymethacrylat enthält. Die Schale wird bevorzugt durch Pfropfung von Styrol gebildet.

Die Polymermischung enthält bevorzugt 20 bis 99 Gew.-%, besonders bevorzugt 50 bis 95 Gew.-% eines thermoplastischen Polymeren, insbesondere Styrolpolymere wie Standard- oder Schlagzähpolystyrol oder Styrol-Acrylnitril-Copolymere (SAN) oder Acrylnitril-Butadien-Styrol-Copolymere (ABS). In Abmischung mit den vorgenannten Kern-Schale-Teilchen bildet sich somit eine zweiphasige Polymermischung, in denen die Kern-Schale-Teilchen die Domänen im Bereich von 5 bis 200 nm bilden. Die mehrphasige Polymermischung kann beispielsweise durch Extrusion einer Mischung von 1 bis 80 Gew.-%, insbesondere 5 bis 50 Gew.-% eines Kern-Schale-Teilchens mit 20 bis 99 Gew.-%, insbesondere 50 bis 95 Gew.-% eines thermoplastischen Polymeren hergestellt werden.

Erfindungswesentlich ist die nicht-homogene Verteilung des Treibmittels in der mehrphasigen Polymermischung, die segregierte mesoskopische Bereiche im Nanometerbereich bilden. Diese Domänen haben ein höheres oder niedrigeres Sorptionsvermögen in Hinblick auf das Treibmittel oder Weichmacher Additive als die umgebende Matrix. In einem A-B Diblockcopolymer beispielsweise, deren Block A eine deutlich höhere Löslichkeit im Treibmittel hat als Block B, liegen im Gleichgewichtszustand Domänen stark unterschiedlicher Treibmitteldichte vor. Die Längenskala dieser nicht-homogenen Treibmitteldichte ist genau die Längenskala der Mikrophasenseparation des Blockcopolymers, d.h. typischerweise im Bereich von etwa 10 bis 200 nm.

Wird eine derartige mit einem selektiven Treibmittel versehene mikrophasenseparierte Polymermischung beispielsweise durch Erhitzen mit Heißluft oder Wasserdampf expandiert, so erfolgt aufgrund der nicht-homogenen Verteilung des Treibmittels die Blasenbildung bevorzugt in den Mikrophasen, die die höhere Treibmittelmenge enthalten. Wählt man z.B. ein Blockcopolymer oder eine entsprechende Mischung aus einem Blockcopolymer und einem Homopolymer, das isolierte sphärische Domänen enthält, so ergibt sich die theoretische Keimbildungszahl im Schaum aus der Dichte der Mikrodomänen.

Die Treibmittel werden daher entsprechend der Löslichkeit der Polymeren oder Polymersegmente der mehrphasigen Polymermischung ausgewählt. Erfindungsgemäß wird als Treibmittel ein Kohlenwasserstoff, Alkohol, Keton, Ether oder Alkylester mit einem Siedepunkt bei Normaldruck unter 120°C oder eine Mischung davon verwendet. Bei einer Polymermischung, die aus einem Styrolpolymer, wie Polystyrol und einer polareren Domänen bildenden Phase, beispielsweise aus Acrylat oder Methacrylat besteht, wird bevorzugt ein Alkohol, wie Ethanol oder Methanol verwendet.

Des weiteren können der mehrphasigen Polymermischung Additive, Keimbildner, Weichmacher, Flammschutzmittel, lösliche und unlösliche anorganische und/oder organische Farbstoffe und Pigmente, Füllstoffe oder Cotreibmittel in Mengen zugesetzt werden, die die Domänenbildung und daraus resultierende nanozelluläre Schaumstoffstruktur nicht beeinträchtigen.

Geeignete Cotreibmittel sind solche mit einer geringeren Selektivität der Löslichkeit für die Domänen bildenden Phase, beispielsweise Gase wie CO₂, N₂, Fluorkohlenwasserstoffe oder Edelgase. Diese werden bevorzugt in Mengen von 0 bis 10 Gew.-%, bezogen auf die Polymermischung, eingesetzt.

Die erfindungsgemäßen nanoporösen Polymerschaumstoffe können nach einem Verfahren hergestellt werden, welches folgende Stufen umfasst:
a) Herstellen einer mehrphasigen Polymermischung mit Domänen im Bereich von 5 bis 200 nm,
b) Imprägnieren der Polymermischung mit einem Treibmittel, wobei die Löslichkeit des Treibmittels in der die Domänen bildenden Phase mindestens doppelt so hoch ist wie in den angrenzenden Phasen,

Expandieren der treibmittelhaltigen, mehrphasigen Polymermischung.

Besonders bevorzugt wird in Stufe a) ein Kern-Schale-Teilchen mit einem Kern aus einem Polyacrylat oder Polymethacrylat mit Polystyrol vermischt und in Stufe b) mit Methanol als Treibmittel bei einem Druck im Bereich von 1 bis 300 bar und einer Temperatur im Bereich von 0 bis 300°C imprägniert.

Die nach diesem Verfahren erhältlichen expandierbaren, treibmittelhaltigen mehrphasigen Polymermischung mit Domänen im Bereich von 5 bis 200 nm können beispielsweise granuliert und mit Heißluft oder Wasserdampf zu nanoporösen Schaumstoffpartikeln expandiert werden. Die Schaumstruktur ist vollständig oder teilweise nanozellulär mit Zellgrößen bis 1000 nm, bevorzugt im Bereich von 10 bis 400 nm, besonders bevorzugt im Bereich von 30 bis 300 nm.

Besonders bevorzugt wird ein kontinuierliches Verfahren, bei dem die Stufe a) ein thermoplastischen Matrixpolymer, beispielsweise Polystyrol in einem Zweiwellen-Extruder aufgeschmolzen um zur Bildung der mit mehrphasigen Polymermischung mit einem geeigneten Blockcopolymeren oder Kern-Schale-Partikel vermischt wird und anschließend die Polymerschmelze in Stufe b) durch eine oder mehrere statische und/oder dynamischen Mischelemente gefördert und mit dem Treibmittel imprägniert wird.

Die treibmittelbeladene Schmelze kann anschließend durch eine entsprechende Düse zu nanozellulären Schaumstoffplatten, -strängen oder -Partikeln extrudiert und geschnitten werden.

Mittels Unterwassergranulierung (UWG) kann die aus der Düse austretende Schmelze auch direkt zu expandierbaren oder gezielt angeschäumten Polymerpartikeln geschnitten werden. Die Einstellung des geeigneten Gegendrucks und einer geeigneten Temperatur im Wasserbad des UWG ermöglicht somit eine gezielte Herstellung von nanozellulären Schaumstoffpartikeln zu ermöglichen.

Bevorzugt werden die erhaltenen runden oder ovalen Partikel auf einen Durchmesser im Bereich von 0,2 bis 10 mm aufgeschäumt. Im allgemeinen verringert sich die Dichte der nanozellulären Schaumstoffpartikel gegenüber dem kompakten Ausgangsmaterial um den Faktor 2 bis 30. Ihre Schüttdichte liegt im Falle von Polystyrol im Bereich von unter 500 g/l. Bevorzugt sind Schüttdichten von unter 200 g/l.

Die erfindungsgemäßen, nanozellulären Schaumstoffpartikel können direkt in Schüttungen zur Verbesserung des Dämmvermögens verwendet werden oder Partikelschaumstoffen beliebiger Form verklebt oder verschweißt werden.

Bevorzugt werden die nanozellulären Schaumstoffpartikel unter Druck und Temperatureinwirkung, beispielsweise durch Wasserdampf oder heiße Luft wie Polystyrolpartikelschaumstoffe aus expandierbarem Polystyrol (EPS) verschweißt. Dabei können durch Kompression und Verschweißen der Randzonen der Primär-Partikel Überstrukturen im resultierenden Schaumstoffformkörper entstehen ("Schaum in Schaum Struktur"). Diese Überstruktur trägt wesentlich zu einer verbesserten Mechanik der Schaumstoffformkörper bei, während die verbleibenden nanozellulären Innenbereiche die verbesserte Wärmedämmung gewährleisten.

Die erfindungsgemäßen, nanoporösen Polymerschaumstoffe zeichnen sich durch eine hohe Gesamtporosität und damit verbundenen niedrige Dichte und eine geringe Porengröße aus. Bevorzugt liegt die Dichte im Bereich von 5 bis 200 g/l und der mittlere Porendurchmesser im Bereich von 10 bis 1000 nm, bevorzugt im Bereich von 30 bis 300 nm. Die erfindungsgemäßen nanoporösen Polymerschaumstoffe weisen eine geringe Wärmeleitfähigkeit, in der Regel unter 33 mW/mK auf und eignen sich daher besonders für Wärmeisolationsanwendungen, wie Dämmplatten im Baugewerbe, Kühlaggregaten, Fahrzeugen oder Industrieanlagen.

### Beispiele:

### Beispiel 1:

### 1. Herstellung eines PS-PMMA Latexes (A)

Das Polymerisationsgefäß wurde mit der jeweiligen Vorlage befüllt, mit Stickstoff gespült und auf 85°C erhitzt.

Zur Polymerisation der 1. Stufe wurde Zulauf 1 zugegeben, 5 Minuten anpolymerisiert, danach Zulauf 2 und 3 gleichzeitig in 3 h zudosiert. Nach Zulaufende wurde noch 30 Minuten gerührt, um möglichst hohen Umsatz zu erzielen.

| | |
|---|---|
| Vorlage: | 596 g Wasser, |
| | 760 g Arylsulfonat 15%ig |
| | |
| Zulauf 1: | 55,8 g Wasser |
| | 4,2 g Natriumpersulfat |
| | |
| Zulauf 2: | 594 g Methylmethacrylat |
| | 6 g Allylmethacrylat |
| | |
| Zulauf 3: | 100 g Wasser |
| | 1,8 g Natriumpersulfat |

Zur Polymerisation der 2. Stufe wurde anschließend Zulauf 4 und 5 gleichzeitig in 3h zudosiert und anschließend eine weitere Stunde gerührt.

| | |
|---|---|
| Zulauf 4: | 446 g Wasser |
| | 13,3 g Dowfax 2A1 45%ig |
| | 600 g Styrol |
| | |
| Zulauf 5: | 1,8 g Rongalit C |

Die Filtration über ein 125 µm Netz ergab 2 g Koagulat. Die Bestimmung der mittleren Teilchengröße des Polymerisats erfolgte durch Lichtstreuung nach ISO 13321 mit einem Malvem Autosizer 2C an 0,01 gew.-%igen Proben.

Für die 1. Stufe wurde eine mittlere Teilchengröße von 76 nm bestimmt, für das Endprodukt eine mittlere Teilchengröße von 90 nm.

Der auf Raumtemperatur abgekühlte Reaktionsansatz wurde 24 h bei -20°C eingefroren, danach wieder auftauen lassen, und das über einem Papierfilter abgetrennte Präzipitat im Trockenschrank bei 40°C getrocknet.

### 2. Herstellung des Schaumstoffs

Zur Herstellung des Schaumstoffs wurde eine Mischung aus 16,7 g des getrockneten Latexes aus 1 (A) mit 83,3 g Polystyrol der Molmasse 197 kg/mol (M_{w}/Mₙ = 2,5) in einem Doppelschnecken-Miniextruder der Firma Haake aufgeschmolzen, homogenisiert und zu Strängen mit einem Durchmesser von 3 mm extrudiert und auf eine Länge von 2 bis 10 cm geschnitten. Die Mischtemperatur betrug 170°C, die Mischzeit 15 min und die Rotationsgeschwindigkeit 30 /min.

Anschließend wurden die Polymerstränge in einem Autoklaven bei 190 bar und Raumtemperatur in Methanol über 24 h imprägniert.

Der eigentliche Aufschäumvorgang erfolgt durch Temperatursprung, indem die mit Methanol imprägnierte Probe in ein 110°C heißes Ölbad 20 Sekunden eingetaucht wurde. Zum Abkühlen wurde die geschäumte Probe in kaltes Wasser eingetaucht und anschleißend bei 50°C während 48h getrocknet.

In der Rasterelektronischen Aufnahme sind Poren in der Größe von etwa 1 µm und kleiner zu erkennen.

## Patentansprüche

1. Nanoporöse Polymerschaumstoffe, erhältlich durch Expandieren einer einen Kohlenwasserstoff, Alkohol, Keton, Ether oder Alkylester mit einem Siedepunkt bei Normaldruck unter 120°C oder eine Mischung davon als Treibmittel enthaltenden, mehrphasigen Polymermischung mit Domänen im Bereich von 5 bis 200 nm, **dadurch gekennzeichnet, dass** die Löslichkeit des Treibmittels in der die Domänen bildenden Phase mindestens doppelt so hoch ist wie in den angrenzenden Phasen.

2. Nanoporöse Polymerschaumstoffe nach Anspruch 1, **dadurch gekennzeichnet, dass** die Domänen-bildende Phase aus einem durch Emulsionspolymerisation erhältlichen Kern-Schale-Teilchen besteht.

3. Nanoporöse Polymerschaumstoffe nach Anspruch 2, **dadurch gekennzeichnet, dass** das Kern-Schale-Teilchen einen Kern aus einem Polyacrylat oder Polymethacrylat enthält.

4. Nanoporöse Polymerschaumstoffe nach einem der Ansprüche 1 bis 3, **dadurch gekennzeichnet, dass** die Polymermischung 20 bis 99 Gew.-% Polystyrol enthält.

5. Nanoporöse Polymerschaumstoffe nach einem der Ansprüche 1 bis 4, **dadurch gekennzeichnet, dass** die Dichte im Bereich von 5 bis 200 g/l liegt.

6. Nanoporöse Polymerschaumstoffe nach einem der Ansprüche 1 bis 5, **dadurch gekennzeichnet, dass** der mittlere Porendurchmesser im Bereich von 10 bis 1000 nm liegt.

7. Verfahren zur Herstellung von nanoporösen Polymerschaumstoffen, umfassend die Stufen
a) Herstellen einer mehrphasigen Polymermischung mit Domänen im Bereich von 5 bis 200 nm,
b) Imprägnieren der Polymermischung mit einem Treibmittel, wobei die Löslichkeit des Treibmittels in der die Domänen bildenden Phase mindestens doppelt so hoch ist wie in den angrenzenden Phasen,
c) Expandieren der treibmittelhaltigen, mehrphasigen Polymermischung.

8. Verfahren nach Anspruch 7, **dadurch gekennzeichnet, dass** die mehrphasige Polymermischung durch Extrusion einer Mischung von 1 bis 80 Gew.-% eines Kern-Schale-Teilchens mit 20 bis 99 Gew.-% eines thermoplastischen Polymeren hergestellt wird.

9. Verfahren nach Anspruch 8, **dadurch gekennzeichnet, dass** das Kem-Schale-Teilchen einen Kern aus einem Polyacrylat oder Polymethacrylat enthält, als thermoplastisches Polymer Polystyrol und als Treibmittel Methanol eingesetzt wird.

10. Expandierbare, treibmittelhaltige mehrphasige Polymermischung mit Domänen im Bereich von 5 bis 200 nm, welche als Treibmittel 1 bis 30 Gew.-% eines Kohlenwasserstoffs, Alkohol, Keton, Ether oder Alkylester mit einem Siedepunkt bei Normaldruck unter 120°C oder Mischungen daraus enthält, **dadurch gekennzeichnet, dass** sich die Löslichkeit des Treibmittels in der die Domänen bildenden Phase mindestens doppelt so hoch ist wie in den angrenzenden Phasen.

## Claims

1. A nanoporous polymer foam, obtainable by expanding a multiphase polymer mixture comprising, as a blowing agent, a hydrocarbon, alcohol, ketone, ether or alkyl ester having a boiling point at standard pressure below 120°C or a mixture thereof, and having domains in the range from 5 to 200 nm, wherein the solubility of the blowing agent in the phase forming the domains is at least twice as high as in the adjacent phases.

2. The nanoporous polymer foam according to claim 1, wherein the domain-forming phase consists of a core-shell particle obtainable by emulsion polymerization.

3. The nanoporous polymer foam according to claim 2, wherein the core-shell particle comprises a core composed of a polyacrylate or polymethacrylate.

4. The nanoporous polymer foam according to any of claims 1 to 3, wherein the polymer mixture comprises from 20 to 99% by weight of polystyrene.

5. The nanoporous polymer foam according to any of claims 1 to 4, wherein the density is in the range from 5 to 200 g/l.

6. The nanoporous polymer foam according to any of claims 1 to 5, wherein the average pore diameter is in the range from 10 to 1000 nm.

7. A process for producing nanoporous polymer foams, comprising the stages of
a) preparing a multiphase polymer mixture having domains in the range from 5 to 200 nm,
b) impregnating the polymer mixture with a blowing agent, the solubility of the blowing agent in the phase forming the domains being at least twice as high as in the adjacent phases,
c) expanding the blowing agent-containing multiphase polymer mixture.

8. The process according to claim 7, wherein the multiphase polymer mixture is obtained by extruding a mixture of from 1 to 80% by weight of a core-shell particle comprising from 20 to 99% by weight of a thermoplastic polymer.

9. The process according to claim 8, wherein the core-shell particle comprises a core composed of a polyacrylate or polymethacrylate, polystyrene as the thermoplastic polymer and methanol as the blowing agent.

10. An expandable blowing agent-containing multiphase polymer mixture having domains in the range from 5 to 200 nm, which comprises, as the blowing agent, from 1 to 30% by weight of a hydrocarbon, alcohol, ketone, ether or alkyl ester having a boiling point at standard pressure below 120°C or mixtures thereof, wherein the solubility of the blowing agent in the phase forming the domains is at least twice as high as in the adjacent phases.

## Revendications

1. Mousses de polymères nanoporeuses, pouvant être obtenues par expansion d'un mélange polyphasique de polymères à domaines dans la plage de 5 à 200 nm, contenant en tant qu'agent d'expansion un hydrocarbure, un alcool, une cétone, un éther ou un ester alkylique ayant un point d'ébullition inférieur à 120 °C sous la pression normale ou un mélange de ceux-ci, **caractérisées en ce que** la solubilité de l'agent d'expansion dans la phase constituant les domaines est au moins deux fois plus grande que dans les phases adjacentes.

2. Mousses de polymères nanoporeuses selon la revendication 1, **caractérisées en ce que** la phase constituant les domaines consiste en une particule à noyau-enveloppe pouvant être obtenue par polymérisation en émulsion.

3. Mousses de polymères nanoporeuses selon la revendication 2, **caractérisées en ce que** la particule à noyau-enveloppe contient un noyau à base d'un polyacrylate ou polyméthacrylate.

4. Mousses de polymères nanoporeuses selon l'une quelconque des revendications 1 à 3, **caractérisées en ce que** le mélange de polymères contient de 20 à 99 % en poids de polystyrène.

5. Mousses de polymères nanoporeuses selon l'une quelconque des revendications 1 à 4, **caractérisées en ce que** la densité se situe dans la plage de 5 à 200 g/l.

6. Mousses de polymères nanoporeuses selon l'une quelconque des revendications 1 à 5, **caractérisées en ce que** le diamètre moyen de pore se situe dans la plage de 10 à 1 000 nm.

7. Procédé pour la production de mousses de polymères nanoporeuses, comprenant les étapes
a) préparation d'un mélange de polymères à domaines dans la plage de 5 à 200 nm,
b) imprégnation du mélange de polymères avec un agent d'expansion, la solubilité de l'agent d'expansion dans la phase constituant les domaines étant au moins deux fois plus grande que dans les phase adjacentes,
c) expansion du mélange de polymères polyphasique, contenant un agent d'expansion.

8. Procédé selon la revendication 7, **caractérisé en ce que** le mélange de polymères polyphasique est préparé par extrusion d'un mélange de 1 à 80 % en poids d'une particule à noyau-enveloppe avec 20 à 99 % en poids d'un polymère thermoplastique.

9. Procédé selon la revendication 8, **caractérisé en ce que** la particule à noyau-enveloppe contient un noyau à base d'un polyacrylate ou polyméthacrylate, du polystyrène en tant que polymère thermoplastique et du méthanol en tant qu'agent d'expansion.

10. Mélange de polymères polyphasique expansible, contenant un agent d'expansion, à domaines dans la plage de 5 à 200 nm, qui contient en tant qu'agent d'expansion de 1 à 30 % d'un hydrocarbure, d'un alcool, d'une cétone, d'un éther ou d'un ester alkylique ayant un point d'ébullition inférieur à 120 °C sous la pression normale ou des mélanges de ceux-ci, **caractérisé en ce que** la solubilité de l'agent d'expansion dans la phase constituant les domaines est au moins deux fois plus grande que dans les phase adjacentes.
